# FASCICULE DE BREVET EUROPEEN

(11) **EP 3 942 196 B1**
(45) Date de publication et mention de la délivrance du brevet: **12.04.2023**
(21) Numéro de dépôt: 20707732.2
(22) Date de dépôt: 10.02.2020
(51) Int. Cl.: F16F 9/49, F16F 9/512, F16F 9/18

(54) **AMORTISSEUR AVEC BUTÉE DE FIN DE COURSE AUTO-ADAPTABLE EQUIPÉE D'UNE CHAMBRE EN AVANT D'UN BOISSEAU**
FLUIDDÄMPFER AUWEISEND EINEN SELBSTANPASSENDEN ANSCHLAG MIT EINER KAMMER VOR EINEM SCHIEBER
FLUID DAMPER FEATURING A SELF-ADAPTING END STOP WITH A CHAMBER AHEAD OF A SLIDER

(30) Priorité: 22.03.2019 FR 1902997
(43) Date de publication de la demande: 26.01.2022
(73) Titulaire: PSA Automobiles SA, 78300 Poissy (FR)
(72) Inventeur: ALLEGRE, Jean Marc, 91470 LIMOURS (FR); RIGUEL, Frederic, 92300 LEVALLOIS PERRET (FR); MONTEIL, Christophe, 91640 BRIIS SOUS FORGES (FR); CAVAREC, Alan, 78350 LES LOGES EN JOSAS (FR); BONTRON, Francis, 92190 MEUDON (FR)
(86) Numéro de dépôt international: PCT/FR2020/050225
(87) Numéro de publication internationale: WO 2020/193884

(56) Documents cités:
- EP-A1- 3 406 931
- FR-A1- 3 050 000
- JP-U- S56 155 139
- JP-U- S58 137 143
- US-A1- 2016 025 174
- US-A1- 2016 223 045

## Description

La présente invention concerne un amortisseur hydraulique disposant d'une butée de fin de course, ainsi qu'un véhicule automobile équipé de ce type d'amortisseur.

Les véhicules automobiles comportent généralement pour chaque roue une suspension comprenant un ressort de suspension, et un amortisseur télescopique hydraulique qui freine les mouvements de cette suspension. En particulier l'amortisseur peut comporter une butée hydraulique de fin de course, qui arrête le mouvement en bout de course pour éviter un choc sur une butée rigide.

Un type de butée hydraulique de fin de course réglable connu, présenté notamment par le document US-A-3207270, comporte une tige recevant une poussée axiale d'un mouvement à freiner, entraînant un piston coulissant dans un cylindre présentant une série de perçages répartis sur la longueur. Un système de commande manuelle disposé à l'extérieur du cylindre, permet de régler la fermeture de ces perçages afin d'ajuster le niveau de freinage de la butée.

Toutefois le réglage de ce type de butée ne comporte aucun automatisme permettant de s'adapter à différentes charges.

Un autre type de butée connu pour un amortisseur de suspension de véhicule, présenté notamment par le document FR-A1-3050000, comporte une tige de vérin comprenant à son extrémité inférieure un piston d'amortissement pour réaliser l'amortissement principal, se prolongeant vers le bas par une chemise qui en fin de course de compression vient s'ajuster autour d'un tube intérieur de butée.

La chemise comporte une série de perçages répartis axialement, qui sont fermés les uns après les autres lors de l'introduction du tube dans cette chemise afin de freiner de plus en plus fortement le transfert de fluide venant de la chambre extérieure formée autour de la chemise, vers la chambre en avant du piston à l'intérieur du tube. On obtient un freinage de plus en plus élevé de la fin de course de compression de l'amortisseur.

Un ressort de poussée disposé en dessous du piston principal, vient un peu avant la fin de course de l'amortisseur presser sur un boisseau coulissant axialement dans le tube de butée qui comporte des perçages additionnels à différentes hauteurs.

Une chambre de contrôle disposée dans le tube de butée en dessous du boisseau, comporte un passage limité de fluide vers l'extérieur afin de freiner le mouvement de descente de ce boisseau sous l'effet du ressort de poussée, et le mouvement de remontée de ce boisseau sous l'effet d'un ressort de rappel.

De cette manière un appui rapide du ressort de poussée sur le boisseau, lors d'un débattement important de la suspension réalisé de manière occasionnelle pour un véhicule peu chargé, ne descend pas le boisseau freiné par le fluide de la chambre de contrôle, présentant une dynamique lente. Les perçages du tube de butée restent ouverts, donnant une grande souplesse à la butée de fin de course ce qui apporte un confort élevé.

Un appui fréquent du ressort de poussée sur le boisseau avec un véhicule chargé, finit par descendre le boisseau qui ferme des perçages du tube de butée en durcissant plus fortement la butée de fin de course. On obtient une sécurité en évitant un talonnement de la suspension pour ce véhicule chargé. Toutefois ce type de butée comprenant un boisseau réglable intérieur au tube de butée, ne convient pas pour une butée hydraulique de fin de course comportant un piston venant à l'intérieur du tube de butée présentant des perçages répartis sur sa longueur.

Le document US 2016/223045 A1 divulgue un amortisseur hydraulique selon le préambule de la revendication 1.

La présente invention a notamment pour but d'éviter ces inconvénients de la technique antérieure.

Elle propose à cet effet un amortisseur hydraulique comportant un piston d'amortisseur coulissant dans un tube intérieur, se déplaçant axialement lors d'une compression dans une direction appelée avant tournée vers un fond d'amortisseur, ce piston d'amortisseur recevant vers l'avant une tige comprenant à son extrémité un piston de butée rentrant dans un tube de butée de fin de course présentant des perçages qui freinent le fluide sortant de ce tube de butée, cet amortisseur étant remarquable en ce qu'il comporte un boisseau ajusté entre le tube de butée et le tube intérieur en fermant une chambre avant présentant un débit de fuite, ce boisseau étant maintenu axialement entre un ressort de rappel avant disposé dans la chambre avant, prenant appui sur le fond d'amortisseur pour le rappeler dans une position arrière, et un ressort de rappel arrière prenant appui sur le piston d'amortisseur pour le rappeler dans une position avant, le boisseau comprenant une portée principale sur le tube de butée fermant dans la position arrière des perçages arrière du tube et dans la position avant des perçages avant du tube.

Un avantage de cet amortisseur est que le boisseau coulissant autour du tube, séparant la chambre avant d'un volume principal arrière avec le débit de fuite, donne à ce boisseau une dynamique de déplacement lente sous l'effet des deux ressorts de rappel.

Dans le cas d'un véhicule peu chargé le boisseau est rappelé dans la position arrière, ce qui ferme les perçages arrière du tube et libère les perçages avant en donnant une loi de freinage sur une grande course de la butée pour véhicule peu chargé, assurant le confort. Les fonctionnements rapides de la butée ne déplacent pas le boisseau à cause de sa dynamique lente.

Dans le cas d'un véhicule fortement chargé la pression du ressort de rappel arrière s'appliquant pendant longtemps finit par déplacer le boisseau, ce qui libère les perçages arrière et ferme les perçages avant du tube. On obtient avec ces perçages arrière ouverts un freinage faible de la butée pour le début de sa course, et après avoir dépassé ces perçages arrière un freinage important pour sa fin de course adapté à la charge, ce qui permet de conserver un confort de conduite.

L'amortisseur hydraulique selon l'invention peut comporter de plus une ou plusieurs des caractéristiques suivantes, qui peuvent être combinées entre elles.

Avantageusement, le boisseau comporte en avant de la portée principale successivement un dégagement annulaire en contact avec le tube de butée, relié par un conduit à l'arrière de ce boisseau, puis une portée avant sur le tube de butée comprenant une étanchéité fermant la chambre avant.

Avantageusement, l'extrémité avant du tube intérieur comporte des perçages reliant la chambre avant à une chambre de compensation autour de ce tube intérieur, formant une restriction de passage donnant un débit de fuite. Avantageusement, les ressorts de rappel sont des ressorts hélicoïdaux. Dans ce cas, avantageusement le ressort de rappel avant est guidé autour du tube de butée.

Avantageusement, des perçages du tube de butée forment des fentes longitudinales partant de l'extrémité arrière de ce tube de butée, présentant une largeur qui se réduit vers l'avant.

Dans ce cas, avantageusement les perçages avant sont disposés axialement en avant de l'extrémité avant des fentes.

Avantageusement, les perçages arrière présentent une section totale de passage du fluide supérieure à celle des perçages avant. Avantageusement, les perçages avant sont disposés axialement dans le tiers central du tube de butée.

L'invention a aussi pour objet un véhicule automobile équipé d'amortisseurs hydrauliques de suspension, comportant des amortisseurs comprenant l'une quelconque des caractéristiques précédentes.

L'invention sera mieux comprise et d'autres caractéristiques et avantages apparaîtront plus clairement à la lecture de la description ci-après donnée à titre d'exemple, en référence aux dessins annexés dans lesquels :
[Fig. 1] présente en coupe axiale la partie avant d'un amortisseur selon l'invention au repos, le véhicule étant à vide ;
[Fig. 2] présente cet amortisseur en fonctionnement au début de la butée de fin de course ;
[Fig. 3] présente cet amortisseur en fonctionnement à la fin de la butée de fin de course ;
[Fig. 4] présente l'amortisseur au repos le véhicule étant chargé ;
[Fig. 5] présente cet amortisseur en fonctionnement au début de la butée de fin de course ; et
[Fig. 6] présente cet amortisseur en fonctionnement à la fin de la butée de fin de course.

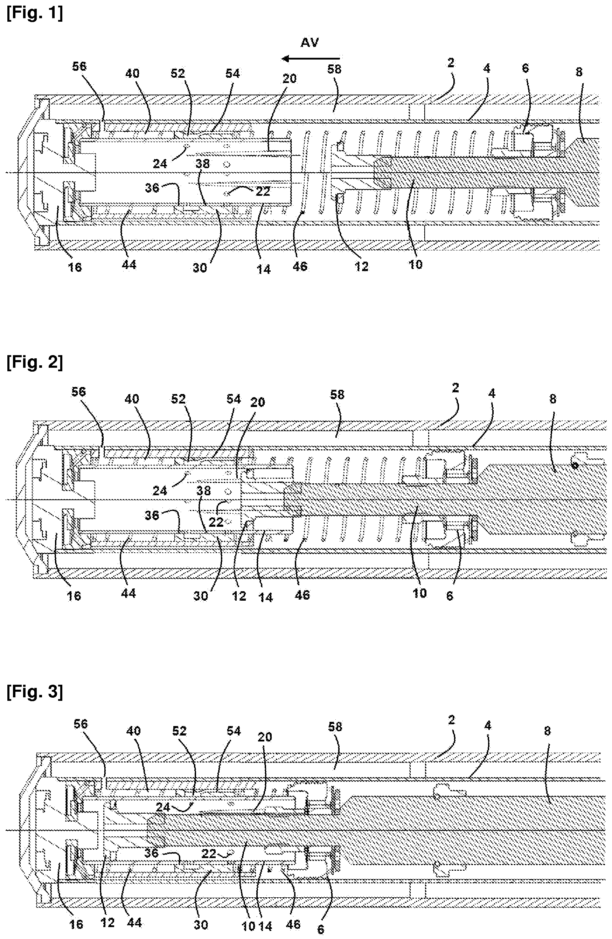

La figure 1 présente un amortisseur télescopique comportant du côté avant indiqué par la flèche AV, un tube intérieur 4 disposé dans un tube extérieur 2 formant un corps, contenant un piston d'amortisseur 6 fixé sur une tige 8 séparant deux chambres hydrauliques pour réaliser l'amortissement principal du mouvement de la suspension. Le volume entre les tubes extérieur 2 et intérieur 4 forme une chambre de compensation 58 contenant un gaz sous pression, qui reçoit le trop-plein de fluide venant du volume déplacé par l'entrée de la tige 8 dans l'amortisseur lors de sa compression.

La tige 8 comporte une prolongation 10 en avant du piston d'amortisseur 6, comprenant à son extrémité avant un piston de butée 12 équipé sur son pourtour d'un joint d'étanchéité donnant un léger débit de fuite, qui rentre vers la fin de course de l'amortisseur dans un tube de butée 14 comprenant un fond d'extrémité avant 16 lié aux tubes extérieur 2 et intérieur 4.

Le tube de butée 14 comporte des fentes longitudinales 20 partant de son extrémité arrière, couvrant près de la moitié de sa longueur, présentant une grande largeur à l'extrémité arrière, qui se réduit progressivement vers l'avant. Le tube de butée 14 comporte de plus deux séries de perçages disposées chacune dans un plan transversal, comprenant des perçages arrière 22 disposés sensiblement au premier tiers arrière de ce tube, en face des fentes 20, et des perçages avant 24 disposés sensiblement au milieu de ce tube, un peu en avant de l'extrémité des fentes. En particulier les perçages avant 24 sont disposés axialement dans le tiers central du tube de butée 14.

Un boisseau 30 coulissant entre le tube de butée 14 et le tube intérieur 4, comporte une portée arrière principale 38 ajustée autour de ce tube, et un diamètre extérieur ajusté dans le tube intérieur 4.

Le boisseau 30 comporte de plus en avant de la portée principale 38, successivement un dégagement annulaire 52 en contact avec le tube de butée 14, relié par un conduit radialement extérieur 54 à l'arrière de ce boisseau, puis une portée avant 36 formant un guidage comprenant une étanchéité fermant une chambre disposée vers l'avant 40.

Le boisseau 30 peut coulisser suivant une course limitée de chaque côté entre une position arrière où sa portée principale 38 ferme les perçages arrière 22, et une position avant où cette portée principale ferme les perçages avant 24.

L'extrémité avant du tube intérieur 4 comporte des petits perçages 56 reliant la chambre avant 40 et la chambre de compensation 58, formant une restriction permettant un écoulement très lent du fluide. On obtient une dynamique lente de coulissement du boisseau 30 donnée par le transfert de fluide de la chambre avant 40 vers la chambre de compensation 58, quand une force vers l'avant sur le boisseau 30 est appliquée pendant suffisamment longtemps.

Le boisseau 30 est maintenu axialement entre deux ressorts hélicoïdaux de rappel, comprenant un ressort de rappel avant 44 prenant appui sur le fond d'extrémité 16 pour rappeler le boisseau dans une position arrière où les perçages arrière 22 sont fermés par la portée principale 38, les perçages avant 24 restant ouvert.

Un ressort de rappel arrière 46 prend appui sur le piston d'amortisseur 6 pour rappeler le boisseau 30 dans une position avant, avec les perçages avant 24 fermés par la portée principale 38, et les perçages arrière 22 ouverts.

Le ressort de rappel avant 44 est guidé sur le tube de butée 14 ce qui assure un faible frottement et une absence de bruit.

Le véhicule étant à vide, le ressort de rappel avant 44 maintient le boisseau 30 dans sa position arrière, lors du roulage du véhicule des passages rapides de l'amortisseur sur la butée de fin de course, avec une fréquence d'environ un Hertz qui est celle de la suspension, ne modifient pas cette position du boisseau grâce à la dynamique lente de transfert du fluide hors de la chambre avant 40 par les petits perçages 56.

La figure 2 présente l'amortisseur en début de sa fin de course, le piston de butée 12 étant entré dans le tube de butée 14. On a un freinage faible au début grâce au débit de fluide passant par une partie large des fentes 20 et par les perçages avant 24, présentant une grande surface de passage.

La figure 3 présente l'amortisseur à la fin de sa fin de course, le piston de butée 12 étant arrivé au bout du tube de butée 14, avec un freinage progressif pendant toute cette course importante comprenant d'abord la fermeture complète des fentes 20.

On a ensuite le fonctionnement avec uniquement les perçages avant 24, le fluide passant par ces perçages étant dirigé par le dégagement annulaire 52 puis le conduit extérieur 54 vers l'arrière du piston de butée 12, de manière à ne pas ajouter une pression dans la chambre avant 40 qui reculerait le boisseau 30. Après la fermeture des perçages avant 24 le freinage est plus important sur la course restante, les petits perçages 56 donnant un très faible débit permettant ce freinage important.

On obtient un niveau de confort élevé avec un freinage progressif sur la course complète de la butée de fin de course.

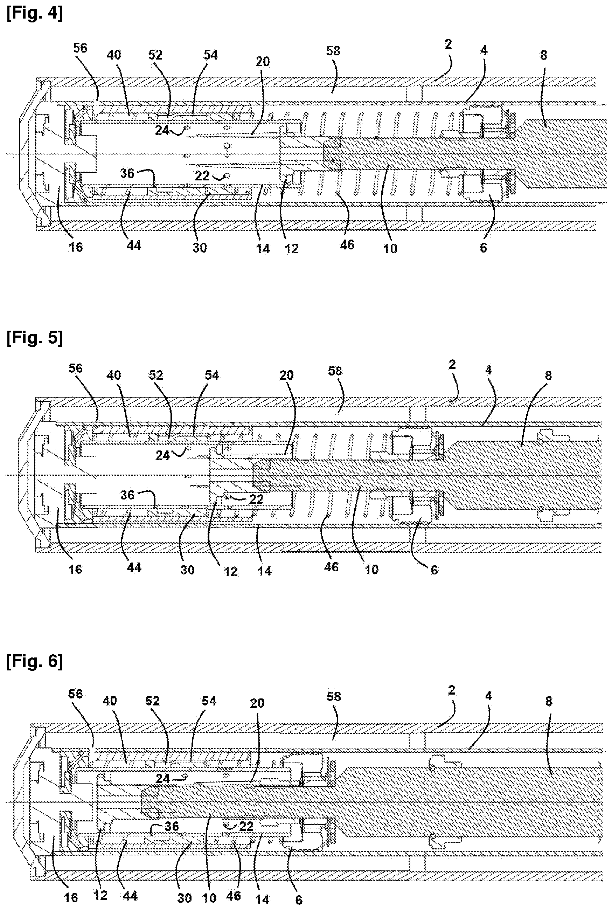

La figure 4 présente le véhicule chargé au repos, le piston de butée 12 arrivant juste au début du tube de butée 14. La pression du ressort de rappel arrière 46 pousse le boisseau 30 vers l'avant en comprimant le ressort de rappel avant 44, ce qui déplace ce boisseau en libérant les perçages arrière 22 et en fermant les perçages avant 24.

Lors du roulage du véhicule avec des petites oscillations de la suspension, les perçages arrière 22 ouverts s'ajoutant aux fentes 20, la butée de fin de course ne freine quasiment pas l'amortisseur. Avantageusement les perçages arrière 22 présentent une section totale de passage supérieure à celle des perçages avant 24. L'amortissement se fait essentiellement par le fonctionnement du piston d'amortisseur 6.

La figure 5 présente le véhicule avec l'amortisseur arrivant en début de la fin de course du véhicule chargé, le piston de butée 12 venant de fermer les perçages arrière 22, la partie avant étroite des fentes 20 restant ouverte.

On a alors un fonctionnement de la butée de fin de course sur une course réduite, allant jusqu'à la fin de course présentée figure 6, mais avec un freinage important grâce à la fermeture des perçages avant 24.

On obtient alors pour le véhicule en charge avec une assiette plus basse à la fois un amortissement normal pour les petites oscillations, et un freinage important sur la course restante pour les grandes oscillations, ce qui assure le confort et la tenue de route.

Après un déchargement du véhicule, le piston d'amortisseur 6 remonte en réduisant la pression sur le ressort de rappel arrière 46. Le boisseau 30 remonte aussi sous l'effet du ressort de rappel avant 44, avec une dynamique lente pour revenir dans la position d'origine présentée figure 1.

On obtient de manière simple et efficace, sans liaison avec l'extérieur ni système électrique, un réglage passif auto-adaptatif de la butée de fin de course. On notera que la butée de fin de course comporte des composants simples en nombre réduit, ce qui lui donne un coût modéré.

## Revendications

1. Amortisseur hydraulique comportant un piston d'amortisseur (6) coulissant dans un tube intérieur (4), se déplaçant axialement lors d'une compression dans une direction appelée avant (AV) tournée vers un fond d'amortisseur (16), ce piston d'amortisseur (6) recevant vers l'avant une tige (10) comprenant à son extrémité un piston de butée (12) rentrant dans un tube de butée de fin de course (14) présentant des perçages (20, 22, 24) qui freinent le fluide sortant de ce tube de butée (14), **caractérisé en ce qu'**il comporte un boisseau (30) ajusté entre le tube de butée (14) et le tube intérieur (4) en fermant une chambre avant (40) présentant un débit de fuite, ce boisseau (30) étant maintenu axialement entre un ressort de rappel avant (44) disposé dans la chambre avant (40), prenant appui sur le fond d'amortisseur (16) pour le rappeler dans une position arrière, et un ressort de rappel arrière (46) prenant appui sur le piston d'amortisseur (6) pour le rappeler dans une position avant, le boisseau (30) comprenant une portée principale (38) sur le tube de butée (14) fermant dans la position arrière des perçages arrière du tube (22) et dans la position avant des perçages avant du tube (24).

2. Amortisseur selon la revendication 1, **caractérisé en ce que** le boisseau (30) comporte en avant de la portée principale (38) successivement un dégagement annulaire (52) en contact avec le tube de butée (14), relié par un conduit (54) à l'arrière de ce boisseau (30), puis une portée avant (36) sur le tube de butée (14) comprenant une étanchéité fermant la chambre avant (40).

3. Amortisseur selon la revendication 1 ou 2, **caractérisé en ce que** l'extrémité avant du tube intérieur (4) comporte des perçages (56) reliant la chambre avant (40) à une chambre de compensation (58) autour de ce tube intérieur (4), formant une restriction de passage donnant un débit de fuite.

4. Amortisseur selon l'une quelconque des revendications précédentes, **caractérisé en ce que** les ressorts de rappel (44, 46) sont des ressorts hélicoïdaux.

5. Amortisseur selon la revendication 4, **caractérisé en ce que** le ressort de rappel avant (44) est guidé autour du tube de butée (14).

6. Amortisseur selon l'une quelconque des revendications précédentes, **caractérisé en ce que** des perçages (20) du tube de butée (14) forment des fentes longitudinales partant de l'extrémité arrière de ce tube de butée (14), présentant une largeur qui se réduit vers l'avant

7. Amortisseur selon la revendication 6, **caractérisé en ce que** les perçages avant (24) sont disposés axialement en avant de l'extrémité avant des fentes.

8. Amortisseur selon l'une quelconque des revendications précédentes, **caractérisé en ce que** les perçages arrière (22) présentent une section totale de passage du fluide supérieure à celle des perçages avant (24).

9. Amortisseur selon l'une quelconque des revendications précédentes, **caractérisé en ce que** les perçages avant (24) sont disposés axialement dans le tiers central du tube de butée (14).

10. Véhicule automobile équipé d'amortisseurs hydrauliques de suspension, **caractérisé en ce qu'**il comporte des amortisseurs selon l'une quelconque des revendications précédentes.

## Patentansprüche

1. Hydraulischer Stoßdämpfer mit einem in einem Innenrohr (4) verschiebbaren Stoßdämpferkolben (6), der sich bei einer Kompression in einer vorderen, einem Stoßdämpferboden (16) zugewandten, genannten Richtung (AV) axial bewegt, wobei der Stoßdämpferkolben (6) nach vorne eine Stange (10) aufnimmt, die an seinem Ende einen Anschlagkolben (12) aufweist, der in ein Endanschlagrohr (14) eingreift, das Bohrungen (20, 22, 24) aufweist, die das aus dem Anschlagrohr (14) austretende Fluid bremsen Ein Getriebe (30), das zwischen dem Anschlagrohr (14) und dem Innenrohr (4) unter Verschluss einer vorderen Kammer (40) mit Leckagerate sitzt, wobei das Getriebe (30) axial zwischen einer vorderen Rückstellfeder (44), die in der vorderen Kammer (40) angeordnet ist, die sich auf dem Dämpferboden (16) abstützt, um ihn in eine hintere Stellung zurückzuholen, und einer hinteren Rückstellfeder (46) gehalten ist, die sich auf dem Dämpferkolben (6) abstützt, um ihn in eine vordere Stellung zurückzuholen, wobei das Getriebe (30) eine Hauptfläche aufweist 8) am Anschlagrohr (14), das in der hinteren Stellung hintere Bohrungen des Rohres (22) und in der vorderen Stellung vordere Bohrungen des Rohres (24) verschließt.

2. Stoßdämpfer nach Anspruch 1, **dadurch gekennzeichnet, dass** die Hülse (30) vor der Hauptauflagefläche (38) nacheinander eine ringförmige Ausnehmung (52) in Kontakt mit dem Anschlagrohr (14) aufweist, die durch eine Leitung (54) mit der Rückseite dieser Hülse (30) verbunden ist, und dann eine vordere Auflagefläche (36) auf dem Anschlagrohr (14) aufweist, die eine die vordere Kammer (40) verschließende Dichtung aufweist.

3. Stoßdämpfer nach Anspruch 1 oder 2, **dadurch gekennzeichnet, dass** das vordere Ende des Innenrohres (4) Bohrungen (56) aufweist, die die vordere Kammer (40) mit einer Ausgleichskammer (58) um dieses Innenrohr (4) herum verbinden und eine Durchflussbeschränkung bilden, die einen Leckagestrom erzeugt.

4. Stoßdämpfer nach einem der vorhergehenden Ansprüche, **dadurch gekennzeichnet, dass** die Rückstellfedern (44, 46) Schraubenfedern sind.

5. Stoßdämpfer nach Anspruch 4, **dadurch gekennzeichnet, dass** die vordere Rückstellfeder (44) um das Anschlagrohr (14) geführt ist.

6. Stoßdämpfer nach einem der vorhergehenden Ansprüche, **dadurch gekennzeichnet, dass** Bohrungen (20) des Anschlagrohres (14) vom hinteren Ende dieses Anschlagrohres (14) ausgehende Längsschlitze mit nach vorn abnehmender Breite bilden

7. Stoßdämpfer nach Anspruch 6, **dadurch gekennzeichnet, dass** die vorderen Bohrungen (24) axial vor dem vorderen Ende der Schlitze angeordnet sind.

8. Stoßdämpfer nach einem der vorhergehenden Ansprüche, **dadurch gekennzeichnet, dass** die hinteren Bohrungen (22) einen größeren Gesamtdurchflussquerschnitt für das Fluid aufweisen als die vorderen Bohrungen (24).

9. Stoßdämpfer nach einem der vorhergehenden Ansprüche, **dadurch gekennzeichnet, dass** die vorderen Bohrungen (24) axial im mittleren Drittel des Anschlagrohres (14) angeordnet sind.

10. Kraftfahrzeug mit hydraulischen Stoßdämpfern für die Aufhängung, **dadurch gekennzeichnet, dass** es Stoßdämpfer nach einem der vorhergehenden Ansprüche aufweist.

## Claims

1. Hydraulic damper comprising a damper piston (6) sliding in an inner tube (4), moving axially during compression in a direction called front (AV) turned towards a damper bottom (16), this damper piston (6) receiving towards the front a rod (10) comprising at its end a stop piston (12) entering into an end-of-travel stop tube (14) having holes (20, 22, 24) which brake the fluid leaving this stop tube (14), **characterized in that** it comprises a plug a slide (30) fitted between the abutment tube (14) and the inner tube (4) by closing a front chamber (40) having a leakage flow, this slide (30) being held axially between a front return spring (44) arranged in the front chamber (40), bearing on the shock absorber base (16) to return it into a rear position, and a rear return spring (46) bearing on the shock absorber piston (6) to return it into a front position, the slide (30) comprising a main bearing surface (38) on the stop tube (14) closes in the rear position of the rear bores of the tube (22) and in the front position of the front bores of the tube (24).

2. Damper according to Claim 1, **characterized in that** the plug (30) comprises, in front of the main bearing surface (38), successively an annular recess (52) in contact with the stop tube (14), connected by a duct (54) to the rear of this plug (30), then a front bearing surface (36) on the stop tube (14) comprising a seal closing the front chamber (40).

3. Shock absorber according to Claim 1 or 2, **characterized in that** the front end of the inner tube (4) comprises holes (56) connecting the front chamber (40) to a compensation chamber (58) around this inner tube (4), forming a passage restriction giving a leakage flow.

4. Shock absorber according to any one of the preceding claims, **characterized in that** the return springs (44, 46) are helical springs.

5. Shock absorber according to Claim 4, **characterized in that** the front return spring (44) is guided around the stop tube (14).

6. Shock absorber according to any one of the preceding claims, **characterized in that** holes (20) in the stop tube (14) form longitudinal slots starting from the rear end of this stop tube (14), having a width which decreases towards the front

7. Shock absorber according to Claim 6, **characterized in that** the front bores (24) are disposed axially in front of the front end of the slots.

8. Shock absorber according to any one of the preceding claims, **characterized in that** the rear bores (22) have a total fluid passage cross-section greater than that of the front bores (24).

9. Shock absorber according to any one of the preceding claims, **characterized in that** the front bores (24) are arranged axially in the central third of the stop tube (14).

10. Motor vehicle equipped with hydraulic suspension dampers, **characterized in that** it comprises dampers according to any one of the preceding claims.
